# EUROPEAN PATENT SPECIFICATION

(11) **EP 2 528 155 B1**
(45) Date of publication and mention of the grant of the patent: **10.07.2019**
(21) Application number: 12169530.8
(22) Date of filing: 25.05.2012
(51) Int. Cl.: H01M 10/44, H01M 10/04, H02J 7/00, H01M 10/48, H01M 10/42

(54) **Battery pack**
Batteriepack
Bloc-batteries

(30) Priority: 26.05.2011 US 201161490542 P; 19.04.2012 US 201213451363
(43) Date of publication of application: 28.11.2012
(73) Proprietor: Samsung SDI Co., Ltd., Yongin-si, Gyeonggi-do (KR)
(72) Inventor: Kim, Bongyoung, Yongin-si, Gyeonggi-do (KR); Shin, Kiho, Yongin-si, Gyeonggi-do (KR)
(74) Representative: Santarelli

(56) References cited:
- JP-A- 8 340 641
- US-A- 5 811 959
- US-A1- 2010 121 511

## Description

### BACKGROUND OF THE INVENTION

### 1. Field of the Invention

The present invention relates to a battery pack.

### 2. Description of the Related Art

Rechargeable secondary batteries are used as portable power sources for portable electronic equipment such as cellular phones, notebook computers, camcorders, personal digital assistants (PDA), and home appliances such as a vacuum cleaner. In a general home vacuum cleaner, a motor of the vacuum cleaner is driven using AC power in the home. However, in order to use the home vacuum cleaner in a space without AC power connected, a separate power source is necessary. The secondary battery used as a portable power source has different capacities according to the specification and high capacity power of approximately 100 V or higher is generally required to be used as the separate power source. US 5811959 and US4297629 describe an interface circuit device for charging and discharging a multicelled battery pack.

### SUMMARY OF THE INVENTION

Embodiments of the invention seek to provide a battery pack for achieving high-efficiency charging and high-power discharging.

According to a first aspect of the invention there is provided a battery pack comprising: a battery module comprising a plurality of battery units, each battery unit being provided with respective electrode terminals; and a control unit for providing a first configuration in which the plurality of battery units are connected in series for discharging the battery module, and a second configuration in which the plurality of battery units are connected in parallel for charging the battery module.

The battery pack includes a battery management device comprising a plurality of charge/discharge terminal units, each charge/discharge terminal unit comprising at least one charge terminal connected to an electrode terminal of a respective battery unit for charging the battery module; and at least one discharge terminal connected to an electrode terminal of the respective battery unit for discharging the battery module.

The control unit comprises a plurality of discharge control terminals, each connected to a discharge terminal of a respective charge/discharge terminal unit of the battery management device; a charge recognition unit for detecting a level of an electrical charging parameter, and a discharge control switch arrangement connected between the discharge control terminals for switching, according to the level of the electrical charging parameter, between the first configuration and the second configuration.

The battery units are connected in parallel one to another through the charge terminals when the battery units are charged, or are connected in series one to another through the discharge terminals when the battery units are discharged.

The control unit controls the discharge control switch arrangement to be connected in series through the discharge terminals when the battery units are discharged.

When the output terminals of a charger are connected to the charge terminals, the charger not being connected to an external power supply, the control unit is configured to maintain the battery units to be connected to each other in series.

The electrical charging parameter may include any measurable electrical parameter related to the charging of a battery device such as a voltage level, a charge level or an intensity of current, for example.

According to an embodiment of the invention in the first configuration at least two respective discharge control terminals are interconnected and in the second configuration the respective discharge control terminals are disconnected from one another.

In an embodiment of the invention the charge recognition unit is operable to distinguish between a discharge mode and a charge mode, wherein the battery units are connected in series when the electrical charging parameter indicates a discharge mode of the battery module, and the battery units are connected in parallel when the electrical charging parameter indicates a charge mode of the battery module.

A discharge mode may include a discharge mode or a discharge standby mode. A charge mode may include a charge mode and a charge standby mode.

In an embodiment of the invention the electrical charging parameter comprises a charging voltage level from a charging device connected to the charge terminals of the battery management device and wherein when the charge recognition unit detects the charging voltage level shifting from high to low or remaining at a first level the control unit is operated to connect the battery units in series, and when the charge recognition unit detects the charging voltage level shifting from low to high or remaining at a second level, the control unit is operated to connect the battery units in parallel.

For example the first level of voltage may correspond to a level of voltage when the battery pack is disconnected from a charging device and the second level of voltage may correspond to a level of voltage when the battery pack is connected to the charging device for charging of the battery pack.

In an embodiment of the invention at least two of the discharge control terminals are connectable to an external load for discharging the battery module.

In an embodiment of the invention the discharge control switch arrangement comprises one or more switches, the or each switch being arranged between respective discharge control terminals.

In an embodiment of the invention each switch is arranged between respective discharge control terminals of opposing polarities.

In an embodiment of the invention each charge/discharge terminal unit is arranged between the electrode terminals of the respective battery unit and a respective charge terminal unit, connectable to a charging device, or the respective discharge control terminal.

In an embodiment of the invention each charge/discharge terminal unit comprises: a positive charge terminal, and a positive discharge terminal connected to the positive charge terminal; and a negative charge terminal, and a negative discharge terminal connected to the negative charge terminal.

In an embodiment of the invention the positive charge terminal and the positive discharge terminal are connected to a positive electrode terminal of the electrode terminals and the negative charge terminal and the negative discharge terminal are connected to a negative electrode terminal of the electrode terminals.

In an embodiment of the invention the positive charge terminal and the negative charge terminal are connected to the charge terminal unit.

In an embodiment of the invention the positive discharge terminal and the negative discharge terminal are connected to the respective discharge control terminal.

In an embodiment of the invention the discharge control switch arrangement further comprises one or more diodes arranged between respective discharge control terminals.

In one embodiment of the invention there is provided a battery module including a plurality of single battery units, a battery management unit including a plurality of charge terminals and a plurality of discharge terminals electrically connected to electrode terminals of the plurality of single battery units, and controlling charging/discharging of the battery module, and a control unit including a plurality of discharge control terminals electrically connected to the plurality of discharge terminals, a discharge control switch installed between each of the plurality of discharge control terminals, and a charge recognizing unit, and controlling the operation of the discharge control switch according to the level of voltage detected by the charge recognizing unit.

### BRIEF DESCRIPTION OF THE DRAWINGS

FIG. 1A is a schematic circuit diagram illustrating a battery pack and a charger in a discharge standby mode according to an embodiment of the present invention;
FIG. 1B is a more detailed circuit diagram of FIG. 1A;
FIG. 1C is an equivalent circuit diagram of a battery pack for the battery pack discharge standby mode of FIG. 1A;
FIG. 2A is a schematic circuit diagram illustrating a battery pack and a charger in a charge standby mode according to an embodiment of the present invention;
FIG. 2B is an equivalent circuit diagram of a battery pack for the battery pack charge standby mode of FIG. 2A;
FIG. 3A is a schematic circuit diagram illustrating a battery pack and a charger in a discharge mode according to an embodiment of the present invention;
FIG. 3B is an equivalent circuit diagram of a battery pack for the battery pack discharge mode of FIG. 3A; and
FIG. 4 is a flowchart illustrating steps of a charge/discharge operation algorithm of a battery pack according to an embodiment of the present invention.

### DETAILED DESCRIPTION

Examplary embodiments will now be described more fully hereinafter with reference to the accompanying drawings; however, it will be appreciated that the invention may be embodied in different forms and should not be construed as limited to the embodiments set forth herein. Rather, these embodiments are provided so that this disclosure will be thorough and complete, and will fully convey the scope of the invention to those skilled in the art.

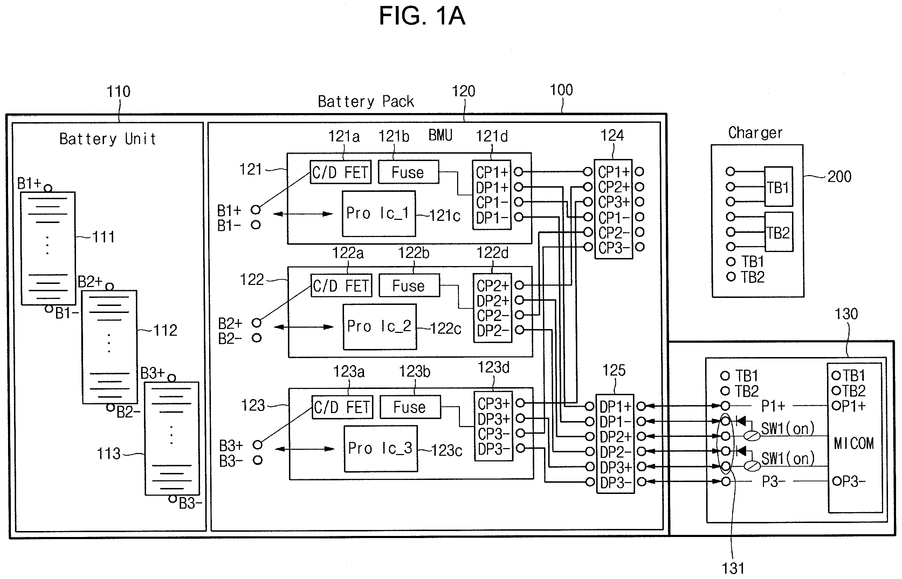

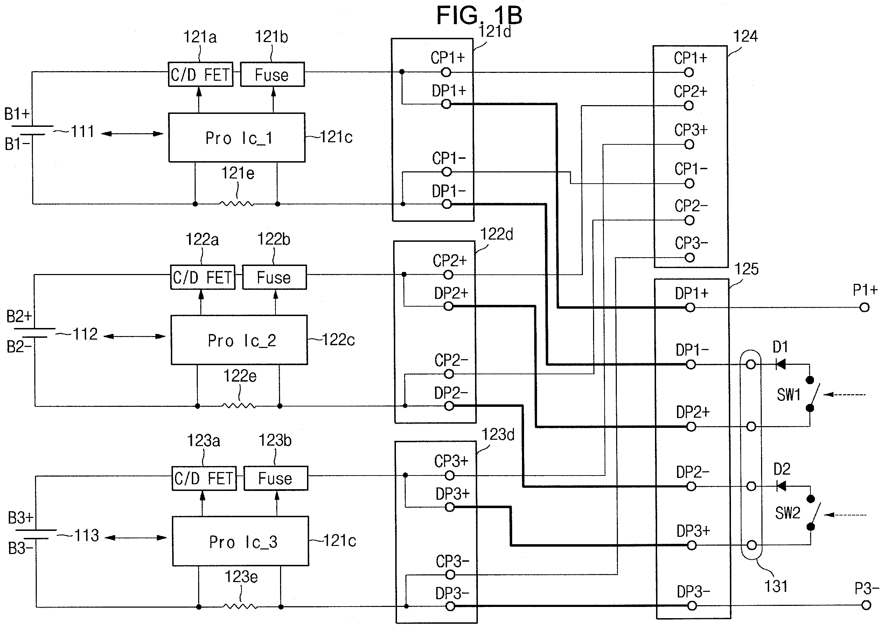

FIG. 1A is a schematic circuit diagram illustrating a battery pack (100) and a charger (200) in a discharge standby mode according to an embodiment of the present invention, and FIG. 1B is a more detailed circuit diagram of FIG. 1A.

Referring to FIGS. 1A and 1B, the battery pack 100 according to the embodiment of the present invention includes a battery module 110, a battery management unit 120, and a control unit 130, such as a microcomputer.

The battery module 110 includes a plurality of single battery units. For example, as shown in FIG. 1A, the battery module 110 may include first to third single battery units 111, 112 and 113. In the following description of the embodiment, the battery module 110 will be described in detail with regard to the battery module 110 including three single battery units, but it will be appreciated that the invention does not limit the battery module thereto.

Each of the first to third single battery units 111, 112 and 113 includes a plurality of battery cells. The plurality of battery cells included in each of the first to third single battery units 111, 112 and 113 are connected to each other in series/parallel.

In addition, the first to third single battery units 111, 112 and 113 include electrode terminals, respectively. For example, as shown in FIG. 1A, the first single battery unit 111 includes a first positive electrode terminal B1+ and a first negative electrode terminal B1-. In addition, the second single battery unit 112 includes a second positive electrode terminal B2+ and a second negative electrode terminal B2-. In addition, the third single battery unit 113 includes a third positive electrode terminal B3+ and a third negative electrode terminal B3-.

The battery management unit 120 includes first to third single battery management units 121, 122 and 123, a charge terminal unit 124, and a discharge terminal unit 125.

The first single battery management unit 121 includes a first charge/discharge switch 121a, a first fuse unit 121b, a first control unit 121c, and a first charge/discharge terminal unit 121d.

The first charge/discharge switch 121a may consist of a charge switch and a discharge switch. The charge switch and the discharge switch may be electrically connected between the first positive electrode terminal B1+ of the first single battery unit 111 and the first fuse unit 121b. The first charge/discharge switch 121a allows the first single battery unit 111 to be charged/discharged and serves as a primary protective circuit device when over-charge or over-discharge occurs.

The first fuse unit 121b may consist of a first fuse, a first heat resistor, and a first fuse switch. In such a case, the first fuse unit 121b may serve as a secondary protective circuit device when the first charge/discharge switch 121a is damaged or malfunctions. Here, the first fuse switch may be controlled by the first control unit 121c.

The first control unit 121c controls a switching operation of the first charge/discharge switch 121a according to charge/discharge mode, thereby controlling charging/discharging of the first single battery unit 111.

In addition, the first control unit 121c detects a voltage of the first single battery unit 111 and performs over-charge/over-discharge protection and voltage balancing of the first single battery unit 111 based on the detected voltage.

The first charge/discharge terminal unit 121d includes a first positive electrode charge terminal CP1+ connected to the first fuse unit 121b, a first positive electrode discharge terminal DP1+; as well as a first negative electrode charge terminal CP1- and a first negative electrode discharge terminal DP1- connected to the first negative electrode terminal B1- of the first single battery unit 111.

For example, the first positive electrode terminal B1+ of the first single battery unit 111 may be connected to the first positive electrode charge terminal CP1+ and the first positive electrode discharge terminal DP1+ through the first charge/discharge switch 121a and the first fuse unit 121b, respectively.

In addition, the first negative electrode terminal B1- of the first single battery unit 111 may be directly connected to the first negative electrode charge terminal CP1- and the first negative electrode discharge terminal DP1-. Of course, a current sensor 121e for sensing the current of the first single battery unit 111 may be provided between the first negative electrode terminal B1- and each of the first negative electrode charge terminal CP1- and the first negative electrode discharge terminal DP1-.

The second single battery management unit 122 includes a second charge/discharge switch 122a, a fuse 122b, a second control unit 122c, and a second charge/discharge terminal unit 122d.

The second charge/discharge switch 122a may consist of a charge switch and a discharge switch. The charge switch and the discharge switch may be electrically connected between the second positive electrode terminal B2+ of the second single battery unit 112 and the second fuse unit 122b. The second charge/discharge switch 122a allows the second single battery unit 112 to be charged/discharged and serves as a primary protective circuit device when over-charge or over-discharge occurs.

The second fuse unit 122b may consist of a second fuse, a second heat resistor, and a second fuse switch. In such a case, the second fuse unit 122b may serve as a secondary protective circuit device when the second charge/discharge switch 122a is damaged or malfunctions. Here, the second fuse switch may be controlled by the second control unit 122c.

The second control unit 122c controls a switching operation of the second charge/discharge switch 122a according to charge/discharge mode, thereby controlling charging/discharging of the second single battery unit 112.

In addition, the second control unit 122c detects a voltage of the second single battery unit 112 and performs over-charge/over-discharge protection and voltage balancing of the second single battery unit 112 based on the detected voltage.

The second charge/discharge terminal unit 122d includes a second positive electrode charge terminal CP2+ connected to the second fuse unit 121b, a second positive electrode discharge terminal DP2+, as well as a second negative electrode charge terminal CP2- and a second negative electrode discharge terminal DP2-connected to the second negative electrode terminal B2- of the second single battery unit 112.

The second positive electrode terminal B2+ of the second single battery unit 112 may be connected to the second positive electrode charge terminal CP2+ and the second positive electrode discharge terminal DP2+ through the second charge/discharge switch 122a and the second fuse unit 122b, respectively.

In addition, the second negative electrode terminal B2- of the second single battery unit 112 may be directly connected to the second negative electrode charge terminal CP2- and the second negative electrode discharge terminal DP2-. Of course, a current sensor 122e for sensing the current of the second single battery unit 111 may be provided between the second negative electrode terminal B1- and each of the second negative electrode charge terminal CP2- and the second negative electrode discharge terminal DP2-.

The third single battery management unit 123 includes a third charge/discharge switch 123a, a fuse 123b, a third control unit 123c, and a third charge/discharge terminal unit 123d.

The third charge/discharge switch 123a may consist of a charge switch and a discharge switch. The charge switch and the discharge switch may be electrically connected between the third positive electrode terminal B3+ of the third single battery unit 113 and the third fuse unit 122b. The third charge/discharge switch 123a allows the third single battery unit 113 to be charged/discharged and serves as a primary protective circuit device when over-charge or over-discharge occurs.

The third fuse unit 123b may consist of a third fuse, a third heat resistor, and a third fuse switch. In such a case, the third fuse unit 123b may serve as a secondary protective circuit device when the third charge/discharge switch 123a is damaged or malfunctions. Here, the third fuse switch may be controlled by the third control unit 123c.

The third control unit 123c controls a switching operation of the third charge/discharge switch 123a according to charge/discharge mode, thereby controlling charging/discharging of the third single battery unit 113.

In addition, the third control unit 123c detects a voltage of the third single battery unit 113 and performs over-charge/over-discharge protection and voltage balancing of the third single battery unit 113 based on the detected voltage.

The third charge/discharge terminal unit 123d includes a third positive electrode charge terminal CP3+ connected to the third fuse unit 123b, a third positive electrode discharge terminal DP3+, as well as a third negative electrode charge terminal CP3- and a third negative electrode discharge terminal DP3- connected to the third negative electrode terminal B3- of third single battery unit 113.
The third positive electrode terminal B3+ of the third single battery unit 113 may be connected to the third positive electrode charge terminal CP3+ and the third positive electrode discharge terminal DP3+ through the third charge/discharge switch 123a and the third fuse unit 123b, respectively.

In addition, the third negative electrode terminal B3- of the third single battery unit 113 may be directly connected to the third negative electrode charge terminal CP3- and the third negative electrode discharge terminal DP3-. Of course, a current sensor 123e for sensing the current of the third single battery unit 113 may be provided between the third negative electrode terminal B1- and each of the third negative electrode charge terminal CP3- and the third negative electrode discharge terminal DP3-.

The charge terminal unit 124 includes first to third positive electrode charge terminals CP1+, CP2+ and CP3+ and first to third negative electrode charge terminals CP1-, CP2- and CP3-. The charge terminal unit 124 is used to gather charge terminals distributed in the first to third charge/discharge terminal units 121d, 122d, 123d into a single physical unit.

Accordingly, the first positive electrode charge terminal CP1+, the second positive electrode charge terminal CP2+ and the third positive electrode charge terminal CP3+ of the charge terminal unit 124 are electrically connected in one-to-one correspondence to the first positive electrode charge terminal CP1+, the second positive electrode charge terminal CP2+ and the third positive electrode charge terminal CP3+ respectively included in the first to third charge/discharge terminal units 121d, 122d, 123d.

In addition, the first negative electrode charge terminal CP1-, the second negative electrode charge terminal CP2- and the third negative electrode charge terminal CP3- of the charge terminal unit 124 are electrically connected in one-to-one correspondence to the first negative electrode charge terminal CP1-, the second negative electrode charge terminal CP2- and the third negative electrode charge terminal CP3- respectively included in the first to third charge/discharge terminal unit 121d, 122d, 123d.

The discharge terminal unit 125 includes first to third positive electrode discharge terminals DP1+, DP2+ and DP3+ and first to third negative electrode discharge terminals DP1-, DP2- and DP3-. The discharge terminal unit 125 is used to gather discharge terminals distributed in the first to third charge/discharge terminal unit 121d, 122d, 123d into a single physical unit.

Accordingly, the first positive electrode discharge terminal DP1+, the second positive electrode discharge terminal DP2+ and the third positive electrode discharge terminal DP3+ of the discharge terminal unit 125 are electrically connected in one-to-one correspondence to the first positive electrode discharge terminal DP1+, the second positive electrode discharge terminal DP2+ and the third positive electrode discharge terminal DP3+ respectively included in the first to third charge/discharge terminal unit 121d, 122d, 123d.

In addition, the first negative electrode discharge terminal DP1-, the second negative electrode discharge terminal DP2- and the third negative electrode discharge terminal DP3- of the discharge terminal unit 125 are electrically connected in one-to-one correspondence to the first negative electrode discharge terminal DP1-, the second negative electrode discharge terminal DP2- and the third negative electrode discharge terminal DP3- respectively included in the first to third charge/discharge terminal unit 121d, 122d, 123d.

The control unit 130 discriminates whether or not the charger 200 and an external power supply are connected to each other when the battery pack 100 and the charger 200 are connected to each other, and determines whether or not to cancel a series connection of the first to third single battery units 111, 112 and 113. An operation of the control unit 130 will later be described and configurations of the control unit 130 will further be described below.

The control unit 130 includes charge recognizing units TB1 and TB2, discharge control terminal unit 131, and first and second discharge control switches SW1 and SW2.

When the battery pack 100 is connected to the charger 200, the charge recognizing units TB1 and TB2 of the control unit 130 are connected to charge recognizing units TB1 and TB2 of the charger 200. Here, the charge recognizing units TB1 and TB2 of the control unit 130 consist of a positive electrode charge recognizing unit TB1 and a negative electrode charge recognizing unit TB2. Likewise, the charge recognizing units TB1 and TB2 of the charger 200 consist of a positive electrode charge recognizing unit TB1 and a negative electrode charge recognizing unit TB2. Therefore, when the battery pack 100 is connected to the charger 200, the positive electrode charge recognizing unit TB1 of the control unit 130 is connected to the positive electrode charge recognizing unit TB1 of the charger 200, and the negative electrode charge recognizing unit TB2 of the control unit 130 is connected to the negative electrode charge recognizing unit TB2 of the charger 200.

The control unit 130 detects a voltage of the charger 200 through the charge recognizing units TB1 and TB2 of the control unit 130 and controls switching operations of the first and second discharge control switches SW1 and SW2 according to whether a level of the detected voltage is shifted from 'high' to 'low' or vice versa, or whether a low level is maintained. For example, the low level may be a first voltage level indicative that the battery pack is not connected to the charger 200 or that the charger 200 is disconnected from an external power supply for charging. The high level may be a second voltage level indicative that the battery pack is connected to the charger 200 and the charger 200 is connected to an external power supply for charging.

The discharge control terminal unit 131 may consist of first and second positive electrode discharge control terminals and first and second negative electrode discharge control terminals.

For example, the first negative electrode discharge control terminal of the discharge control terminal unit 131 is electrically connected to the first negative discharge terminal DP1- of the discharge terminal unit 125, and the second negative electrode discharge control terminal of the discharge control terminal unit 131 is electrically connected to the second negative discharge terminal DP2- of the discharge terminal unit 125. In addition, the first positive electrode discharge control terminal of the discharge control terminal unit 131 is electrically connected to the second positive discharge terminal DP2+ of the discharge terminal unit 125, and the second positive electrode discharge control terminal of the discharge control terminal unit 131 is electrically connected to the third positive discharge terminal DP3+ of the discharge terminal unit 125.

Meanwhile, the first positive electrode discharge terminal DP1+ of the discharge terminal unit 125 is electrically connected to a pack positive electrode terminal P1+, and the third negative electrode discharge terminal DP3- of the discharge terminal unit 125 is electrically connected to a pack negative electrode terminal P3-. The pack positive electrode terminal P1+ and the pack negative electrode terminal P3- are terminals which are connected to an external load when the battery pack 100 is discharged and through which current is output.

The first discharge control switch SW1 is electrically connected between the first negative electrode discharge control terminal and the first positive electrode discharge control terminal of the discharge control unit 131. In addition, the second discharge control switch SW2 is electrically connected between the second negative electrode discharge control terminal and the second positive electrode discharge control terminal of the discharge control unit 131. Further, diodes may be connected between the first negative electrode discharge control terminal and the first discharge control switch SW1 and between the second negative electrode discharge control terminal and the second discharge control switch SW2.

The diodes allow the first to third single battery units to be connected in series so as to output a discharge current when a battery pack is discharged. When a battery pack is charged, the diodes D1 and D2 allow series connections between each of the first to third single battery units to be cancelled in a secured manner. As shown in FIG. 1A, the control unit 130 turns on the first and second discharge control switches SW1 and SW2 to electrically connect a region between the first negative electrode discharge control terminal and the first positive electrode discharge control terminal and a region between the second negative electrode discharge control terminal and the second positive electrode discharge control terminal when the battery pack 100 is in a discharge standby mode, that is, in a natural discharge state. Here, if the regions between the first negative electrode discharge control terminal and the first positive electrode discharge control terminal are connected to each other, the first negative electrode terminal B1- of the first single battery unit 111 and the second positive electrode terminal B2+ of the second single battery unit 112 are connected to each other. If the regions between the second negative electrode discharge control terminal and the second positive electrode discharge control terminal are connected to each other, the second negative electrode terminal B2- of the second single battery unit 112 and the third positive electrode terminal B3+ of the third single battery unit 113 are connected, thereby establishing series connections between each of the first to third single battery units 111, 112 and 113.

Meanwhile, the control unit 130 turns on the first and second discharge control switches SW1 and SW2 not only in a discharge standby mode but also in a discharge mode, thereby establishing series connections between each of the first to third single battery units 111, 112 and 113.

The charger 200 includes a plurality of output terminals and the charge recognizing units TB1 and TB2.

The output terminals of the charger 200 are configured to correspond to the first to third positive electrode charge terminal CP1+, CP2+, CP3+ and the first to third negative electrode charge terminal CP1-, CP2-, CP3-of the charge terminal unit 124 in one-to-one relationship. For example, the plurality of output terminals consist of first to third positive electrode output terminals and first to third negative electrode output terminals. When the battery pack 100 is connected to the charger 200, the first to third positive electrode output terminals are connected to the positive electrode charge recognizing unit TB1 of the charger 200, and the first to third negative electrode output terminals are connected to the negative electrode charge recognizing unit TB2 of the charger 200. When the charge recognizing units TB1 and TB2 of the control unit 130 are not connected to the charger 200, the charge recognizing units TB1 and TB2 may be kept at low-level voltages. And, when the charge recognizing units TB1 and TB2 of the control unit 130 are connected to the charger 200, high-level voltages may be formed in the charge recognizing units TB1 and TB2 of the control unit 130, when for example the charger 200 is connected to an external power supply for charging..

An operation of the battery pack 100 according to an embodiment of the present invention will now be described in detail with reference to the accompanying drawings.

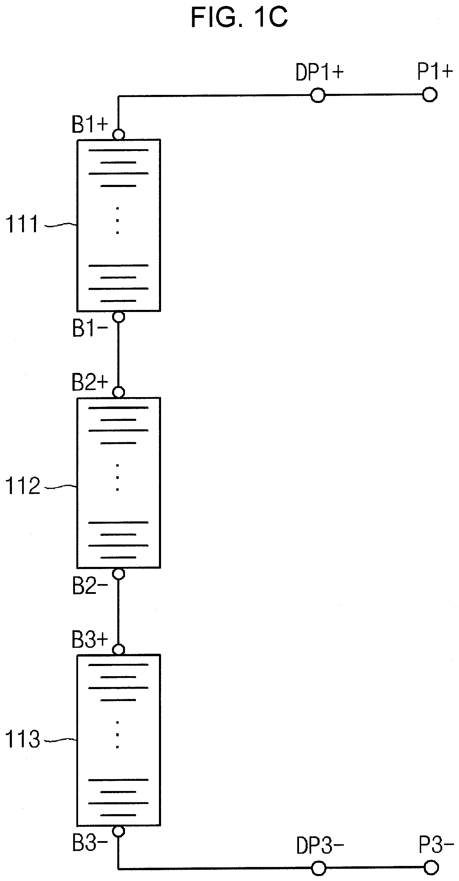

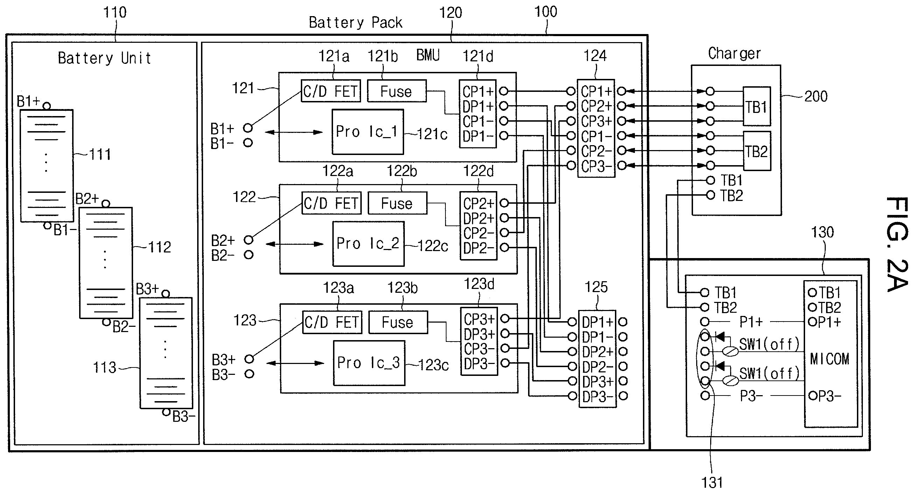

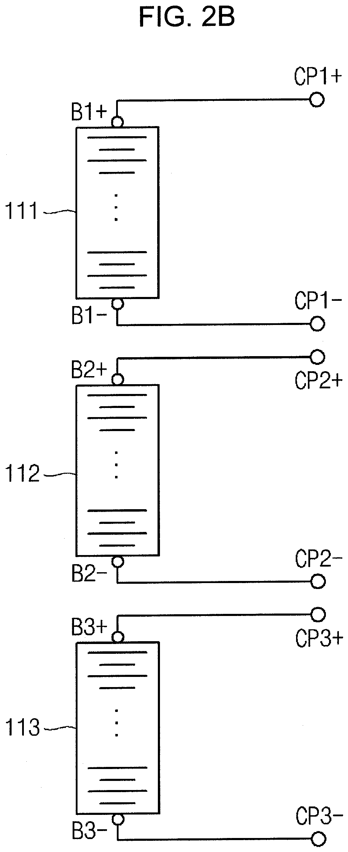

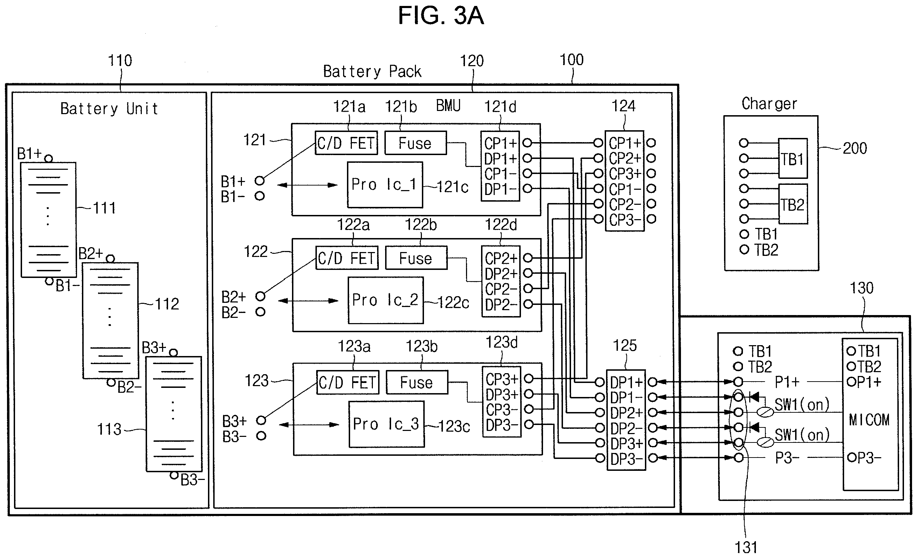

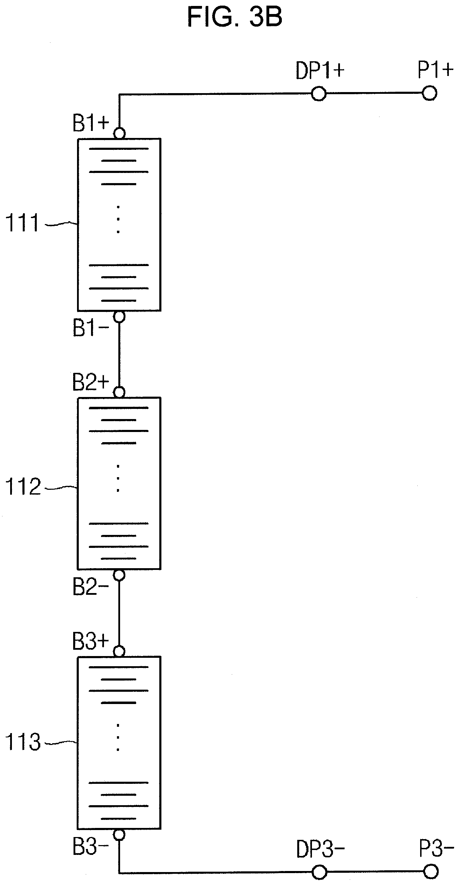

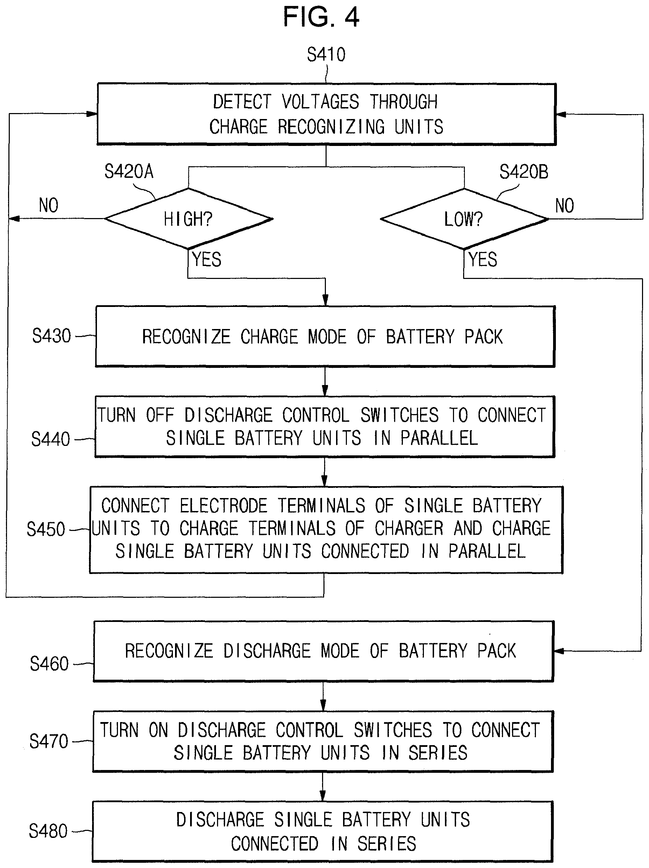

FIG. 1C is an equivalent circuit diagram of a battery pack for the battery pack discharge standby mode of FIG. 1A, FIG. 2A is a circuit diagram illustrating a battery pack and a charger in a charge standby mode according to an embodiment of the present invention, FIG. 2B is an equivalent circuit diagram of a battery pack for the battery pack charge standby mode of FIG. 2A, FIG. 3A is a circuit diagram illustrating a battery pack and a charger in a discharge mode according to an embodiment of the present invention, FIG. 3B is an equivalent circuit diagram of a battery pack for the battery pack discharge mode of FIG. 3A, and FIG. 4 is a flowchart illustrating charge/discharge operation algorithm of a battery pack according to an embodiment of the present invention.

### 1. Discharge standby mode

In order to recognize a mode of the battery pack 100, the control unit 130 continuously detects voltages of the battery pack 100 through the charge recognizing units TB1 and TB2 (S410).

Thereafter, the control unit 130 discriminates whether a level of the detected voltage is high (S420A) or low (S420B). As a discrimination result, when the level of the detected voltage is low (S420B), the control unit 130 recognizes that the battery pack 100 is in a discharge standby mode.

In this case, the control unit 130 turns on the first and second discharge control switches SW1 and SW2 to connect the first to third single battery units 111, 112 and 113 in series. Here, the control unit 130 turns on the first and second discharge control switches SW1 and SW2 to connected the first to third single battery units 111, 112 and 113 to each other in series when the battery pack 100 is not charged by the charger 200 or is not discharged by being connected to an external load, that is, is in a natural discharge state, which may be represented by an equivalent circuit shown in FIG. 1B.

### 2. Charge mode

When output terminals of the charger 200 connected to an external power supply are physically, electrically connected to the charge terminal unit 124 of the battery pack 100, the level of the voltage detected through the charge recognizing units TB1 and TB2 of the control unit 130 is shifted from 'low' to 'high' (S420A).

Here, the control unit 130 recognizes a mode of the battery pack 100 as a charge mode (S430). Accordingly, the control unit 130 turns off the first and second discharge control switches SW1 and SW2.

In such a case, the discharge terminals of the discharge terminal unit 125 are electrically disconnected from each other, thereby cancelling series connections between each of the first to third single battery units 111, 112 and 113.

At this time, the output terminals of the charger 200 are connected to the charge terminal unit 124 of the battery pack 100. Here, since the respective charge terminals of the charge terminal unit 124 are connected to the electrode terminals of the first to third single battery units 111, 112 and 113, respectively, the first to third single battery units 111, 112 and 113 are connected in parallel with respect to the charger 200 (S440). Therefore, the first to third single battery units 111, 112 and 113 are charged in a state in which they are connected in parallel (S450).

However, if the output terminals of the charger 200 are connected to the charge terminal unit 124 of the battery pack 100 but the charger 200 is not connected to an external power supply, the level of the voltage detected through the charge recognizing units TB1 and TB2 of the control unit 130 is low. Therefore, the control unit 130 maintains the first to third single battery units 111, 112 and 113 to be connected to each other in series.

### 3. Discharge mode

The discharge mode recognition and operation algorithms of the battery pack 100 are similar to the discharge standby mode recognition and operation algorithms. As a result of discrimination by the control unit 130, if the voltage level is low (S420B), the control unit 130 recognizes a discharge mode (S460).

In such a case, the control unit 130 turns on the first and second discharge control switches SW1 and SW2 to connect the first to third single battery units 111, 112 and 113 to each other in series (S470). Here, if the pack discharge terminals P1+ and P3- are connected to an external load, the first to third single battery units 111, 112 and 113 are discharged in a state in which they are connected in series through the pack discharge terminals P1+ and P3- (S480).

The control unit 130 performs similar switch control operations depending on whether to recognize a discharge standby mode or a discharge mode is recognized. That is to say, since the control unit 130 turns on the first and second discharge control switches SW1 and SW2 in both the discharge standby mode and the discharge mode, the first to third single battery units 111, 112 and 113 are connected to each other in series in both cases.

Although automatic switching operation control of the battery pack 100 according to the embodiment of the present invention has been described hereinabove, manual switching operation control may also be made without departing from the features of the present invention.

According to the present invention, single battery units are charged by connecting the single battery units to each other in parallel during charging, thereby reducing a total charging time of the battery pack, and the single battery units are discharged by connecting the single battery units to each other in series during discharging, thereby achieving a higher output battery pack.

In addition, according to the present invention, a high-capacity battery pack can be charged using a low-capacity charger. For example, a battery pack having a DC output voltage of 300 V can be charged using a charger having a DC output voltage of 100 V. That is to say, while the first to third single battery units are connected in series during discharging, providing for a DC output voltage of 300 V, the first to third single battery units are connected in parallel with respect to the charger during charging, thereby charging the first to third single battery units having a DC output of 100 V.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A battery pack comprising:
a battery module (100) comprising a plurality of battery units (111, 112, 113), each battery unit (111, 112, 113) being provided with respective electrode terminals (B1+,B1-, B2+,B2- B2+,B2) ;
a control unit (130) for providing a first configuration in which the plurality of battery units (111, 112, 113) are connected in series for discharging the battery module (100), and a second configuration in which the plurality of battery units (111, 112, 113) are connected in parallel for charging the battery module (100);
a battery management device (120) comprising:
a plurality of terminal units (121d, 122d, 123d), each terminal unit (121d, 122d, 123d) comprising at least one charge terminal (CP1+,CP1-, CP2+,CP2- CP3+,CP3) connected to an electrode terminal (B1+,B1-, B2+,B2- B3+,B3) of a respective battery unit (111, 112, 113) for charging the battery module (100); and at least one discharge terminal (DP1+,DP1-, DP2+,DP2- DP3+,DP3) connected to an electrode terminal B1+,B1-, B2+,B2- B2+,B2)of the respective battery unit (111, 112, 113) for discharging the battery module (100).
**characterized in that** the control unit (130) comprises
a plurality of discharge control terminals, each connected to a discharge terminal of a respective terminal unit of the battery management device;
a charge recognition unit (TB1, TB2) for detecting a level of an electrical charging parameter, and
a discharge control switch arrangement (131) connected between discharge control terminals for switching, according to the level of the electrical charging parameter, between the first configuration and the second configuration by turning all control switches (SW1, SW2) in the discharge control switch arrangement respectively either on or off,
wherein the battery units (111, 112, 113) are connected in parallel one to another through the charge terminals (CP1+, CP1-, CP2+, CP2-, CP3+, CP3-) when the battery units (111, 112, 113) are charged, or are connected in series one to another through the discharge terminals (DP1+, DP1-, DP2+, DP2-, DP3+, DP3-) when the battery units (111, 112, 113) are discharged,
wherein the control unit (130) controls the discharge control switch arrangement (131) to switch to the first configuration when the level of the electrical charging parameter is low, and
wherein when the output terminals of a charger (200) are connected to the charge terminals (CP1+, CP1-, CP2+, CP2-, CP3+, CP3-), while the charger 200 is not being connected to an external power supply, the control unit (130) is configured to maintain the battery units (111, 112, 113) to be connected to each other in series.

2. A battery pack (100) according to claim 1 wherein in the first configuration at least two respective discharge control terminals are interconnected and in the second configuration the respective discharge control terminals are disconnected from one another.

3. A battery pack according to claim 1 or 2 wherein the charge recognition unit is operable to distinguish between a discharge mode and a charge mode, wherein the battery units (111, 112, 113)are connected in series when the electrical charging parameter indicates a discharge mode of the battery module (100), and the battery units (111, 112, 113) are connected in parallel when the electrical charging parameter indicates a charge mode of the battery module (100).

4. A battery pack according to claim 3 wherein the electrical charging parameter is the charging voltage level from a charging device (200) connected to the charge terminals (CP1+,CP1-, CP2+,CP2- CP3+,CP3) of the battery management device (100) and wherein when the charge recognition unit detects the charging voltage level shifting from high to low or remaining at a first level the control unit (130) is operated to connect the battery units (111, 112, 113) in series, and when the charge recognition unit detects the charging voltage level shifting from low to high or remaining at a second level, the control unit (130) is operated to connect the battery units (111, 112, 113) in parallel.

5. A battery pack according to any one of claims 1 to 4 wherein at least two of the discharge control terminals are connectable to an external load for discharging the battery module.

6. A battery pack according to any one of claims 1 to 5 wherein the discharge control switch arrangement (131) comprises one or more switches, the or each switch being arranged between respective discharge control terminals.

7. A battery pack according to claim 6 wherein each switch is arranged between respective discharge control terminals of opposing polarities.

8. A battery pack according to any preceding claim wherein each terminal unit (121d, 122d, 123d) is arranged between the electrode terminals (B1+,B1-, B2+,B2-B3+,B3)of the respective battery unit (111, 112, 113) and a respective charge terminal (CP1+,CP1-, CP2+,CP2- CP3+,CP3) connectable to a charging device (200) , or the respective discharge control terminal.

9. A battery pack according to any preceding claim wherein each terminal unit (121D, 122d, 123d) comprises:
a positive charge terminal (CP1+, CP2+, CP3+) and a positive discharge terminal (DP1+, DP2+, DP3+) connected to the positive charge terminal; and
a negative charge terminal, (CP1-, CP2-, CP3-) and a negative discharge terminal (DP1-, DP2-, DP3-) connected to the negative charge terminal

10. A battery pack according to claim 9 wherein the positive charge terminal and the positive discharge terminal are connected to a positive electrode terminal of the electrode terminals (B1+, B2+, B3+,) the negative charge terminal and the negative discharge terminal are connected to a negative electrode terminal (B1-, B2- B3-)of the electrode terminals.

11. A battery pack according to claim 9 or 10 wherein the positive charge terminal and the negative charge terminal are connected to the charge terminal unit (124) .

12. A battery pack according to any one of claims 9 to 11 wherein the positive discharge terminal and the negative discharge terminal are connected to the respective discharge control terminal (125).

13. A battery pack according to any one of claims 6 to 12 wherein the discharge control switch arrangement further comprises one or more diodes arranged between respective discharge control terminals.

## Patentansprüche

1. Batteriepack, umfassend:
ein Batteriemodul (100), umfassend eine Mehrzahl von Batterieeinheiten (111, 112, 113), wobei jede Batterieeinheit (111, 112, 113) mit jeweiligen Elektrodenanschlüssen (B1+, B1-, B2+, B2-, B2+, B2) versehen ist;
eine Steuereinheit (130) zum Bereitstellen einer ersten Konfiguration, in der die Mehrzahl von Batterieeinheiten (111, 112, 113) zum Entladen des Batteriemoduls (100) in Reihe geschaltet ist, und einer zweiten Konfiguration, in der die Mehrzahl von Batterieeinheiten (111, 112, 113) zum Laden des Batteriemoduls (100) parallelgeschaltet ist;
eine Batterieverwaltungsvorrichtung (120), umfassend:
eine Mehrzahl von Anschlusseinheiten (121d, 122d, 123d), wobei jede Anschlusseinheit (121d, 122d, 123d) umfasst: mindestens einen Ladeanschluss (CP1+, CP1-, CP2+, CP2-, CP3+, CP3), der zum Laden des Batteriemoduls (100) an einen Elektrodenanschluss (B1+, B1-, B2+, B2-, B3+, B3) einer jeweiligen Batterieeinheit (111, 112, 113) angeschlossen ist; und mindestens einen Entladeanschluss (DP1+, DP1-, DP2+, DP2-, DP3+, DP3), der zum Entladen des Batteriemoduls (100) an einen Elektrodenanschluss (B1+, B1-, B2+, B2-, B2+, B2) der jeweiligen Batterieeinheit (111, 112, 113) angeschlossen ist,
**dadurch gekennzeichnet, dass** die Steuereinheit (130) umfasst:
eine Mehrzahl von Entladesteueranschlüssen, die jeweils an einen Entladeanschluss einer jeweiligen Anschlusseinheit der Batterieverwaltungsvorrichtung angeschlossen sind;
eine Ladungserkennungseinheit (TB1, TB2) zum Detektieren eines Pegels eines elektrischen Ladeparameters und
eine Entladesteuerschalteranordnung (131), angeschlossen zwischen Entladesteueranschlüssen, zum Umschalten, gemäß dem Pegel des elektrischen Ladeparameters, zwischen der ersten Konfiguration und der zweiten Konfiguration, indem alle Steuerschalter (SW1, SW2) in der Entladesteuerschalteranordnung jeweils entweder ein- oder ausgeschaltet werden,
wobei die Batterieeinheiten (111, 112, 113) durch die Ladeanschlüsse (CP1+, CP1-, CP2+, CP2-, CP3+, CP3-) parallel zueinander geschaltet sind, wenn die Batterieeinheiten (111, 112, 113) geladen werden, oder durch die Entladeanschlüsse (DP1+, DP1-, DP2+, DP2-, DP3+, DP3-) in Reihe zueinander geschaltet sind, wenn die Batterieeinheiten (111, 112, 113) entladen werden,
wobei die Steuereinheit (130) die Entladesteuerschalteranordnung (131) so steuert, dass diese in die erste Konfiguration schaltet, wenn der Pegel des elektrischen Ladeparameters niedrig ist,
wobei, wenn die Ausgangsanschlüsse einer Ladevorrichtung (200) an die Ladeanschlüsse (CP1+, CP1-, CP2+, CP2-, CP3+, CP3-) angeschlossen sind, während die Ladevorrichtung (200) nicht an eine externe Stromversorgung angeschlossen ist, die Steuereinheit (130) so konfiguriert ist, dass sie die Reihenschaltung der Batterieeinheiten (111, 112, 113) zueinander aufrechterhält.

2. Batteriepack (100) nach Anspruch 1, wobei in der ersten Konfiguration mindestens zwei jeweilige Entladesteueranschlüsse zusammengeschaltet sind und in der zweiten Konfiguration die jeweiligen Entladesteueranschlüsse voneinander getrennt sind.

3. Batteriepack nach Anspruch 1 oder 2, wobei die Ladungserkennungseinheit so betätigbar ist, dass sie zwischen einem Entlademodus und einem Lademodus unterscheidet, wobei die Batterieeinheiten (111, 112, 113) in Reihe geschaltet sind, wenn der elektrische Ladeparameter einen Entlademodus des Batteriemoduls (100) anzeigt, und die Batterieeinheiten (111, 112, 113) parallelgeschaltet sind, wenn der elektrische Ladeparameter einen Lademodus des Batteriemoduls (100) anzeigt.

4. Batteriepack nach Anspruch 3, wobei der elektrische Ladeparameter der Ladespannungspegel aus einer Ladevorrichtung (200) ist, die an die Ladeanschlüsse (CP1+, CP1-, CP2+, CP2-, CP3+, CP3) der Batterieverwaltungsvorrichtung (100) angeschlossen ist, und wobei, wenn die Ladungserkennungseinheit detektiert, dass sich der Ladespannungspegel von "hoch" nach "niedrig" verschiebt oder auf einem ersten Pegel bleibt, die Steuereinheit (130) so betätigt wird, dass sie die Batterieeinheiten (111, 112, 113) in Reihe schaltet, und wenn die Ladungserkennungseinheit detektiert, dass sich der Ladespannungspegel von "niedrig" nach "hoch" verschiebt oder auf einem zweiten Pegel bleibt, die Steuereinheit (130) so betätigt wird, dass sie die Batterieeinheiten (111, 112, 113) parallelschaltet.

5. Batteriepack nach einem der Ansprüche 1 bis 4, wobei mindestens zwei der Entladesteueranschlüsse zum Entladen des Batteriemoduls an einen externen Verbraucher anschließbar sind.

6. Batteriepack nach einem der Ansprüche 1 bis 5, wobei die Entladesteuerschalteranordnung (131) einen oder mehrere Schalter umfasst, wobei der oder jeder Schalter zwischen jeweiligen Entladesteueranschlüssen angeordnet ist.

7. Batteriepack nach Anspruch 6, wobei jeder Schalter zwischen jeweiligen Entladesteueranschlüssen mit entgegengesetzten Polaritäten angeordnet ist.

8. Batteriepack nach einem der vorangehenden Ansprüche, wobei jede Anschlusseinheit (121d, 122d, 123d) zwischen den Elektrodenanschlüssen (B1+, B1-, B2+, B2-, B3+, B3) der jeweiligen Batterieeinheit (111, 112, 113) und einem jeweiligen Ladeanschluss (CP1+, CP1-, CP2+, CP2-, CP3+, CP3), der an eine Ladevorrichtung (200) anschließbar ist, oder dem jeweiligen Entladesteueranschluss angeordnet ist.

9. Batteriepack nach einem der vorangehenden Ansprüche, wobei jede Anschlusseinheit (121d, 122d, 123d) umfasst:
einen positiven Ladeanschluss (CP1+, CP2+, CP3+) und einen positiven Entladeanschluss (DP1+, DP2+, DP3+), der an den positiven Ladeanschluss angeschlossen ist; und
einen negativen Ladeanschluss (CP1-, CP2-, CP3-) und einen negativen Entladeanschluss (DP1-, DP2-, DP3-), der an den negativen Ladeanschluss angeschlossen ist.

10. Batteriepack nach Anspruch 9, wobei der positive Ladeanschluss und der positive Entladeanschluss an einen positiven Elektrodenanschluss der Elektrodenanschlüsse (B1+, B2+, B3+) angeschlossen sind, der negative Ladeanschluss und der negative Entladeanschluss an einen negativen Elektrodenanschluss (B1-, B2-, B3-) der Elektrodenanschlüsse angeschlossen sind.

11. Batteriepack nach Anspruch 9 oder 10, wobei der positive Ladeanschluss und der negative Ladeanschluss an die Ladeanschlusseinheit (124) angeschlossen sind.

12. Batteriepack nach einem der Ansprüche 9 bis 11, wobei der positive Entladeanschluss und der negative Entladeanschluss an den jeweiligen Entladesteueranschluss (125) angeschlossen sind.

13. Batteriepack nach einem der Ansprüche 6 bis 12, wobei die Entladesteuerschalteranordnung ferner eine oder mehrere Dioden umfasst, die zwischen jeweiligen Entladesteueranschlüssen angeordnet sind.

## Revendications

1. Bloc-batteries comprenant :
un module de batterie (100) comprenant une pluralité d'unités de batterie (111, 112, 113), chaque unité de batterie (111, 112, 113) étant prévue avec des bornes d'électrode (B1+, B1-, B2+, B2- B2+, B2) respectives ;
une unité de commande (130) pour fournir une première configuration dans laquelle la pluralité d'unités de batterie (111, 112, 113) sont raccordées en série pour décharger le module de batterie (100), et une seconde configuration dans laquelle la pluralité d'unités de batterie (111, 112, 113) sont raccordées en parallèle pour charger le module de batterie (100) ;
un dispositif de gestion de batterie (120) comprenant :
une pluralité d'unités de borne (121d, 122d, 123d), chaque unité de borne (121d, 122d, 123d) comprenant au moins une borne de charge (CP1+, CP1-, CP2+, CP2- CP3+, CP3-) raccordée à une borne d'électrode (B1+, B1-, B2+, B2-B3+, B3) d'une unité de batterie (111, 112, 113) respective pour charger le module de batterie (100) ; et au moins une borne de décharge (DP1+, DP1-, DP2+, DP2- DP3+, DP3) raccordée à une borne d'électrode (B1+, B1-, B2+, B2- B2+, B2) de l'unité de batterie (111, 112, 113) respective pour décharger le module de batterie (100),
**caractérisé en ce que** l'unité de commande (130) comprend :
une pluralité de bornes de commande de décharge, chacune raccordée à une borne de décharge d'une unité de borne respective du dispositif de gestion de batterie ;
une unité de reconnaissance de charge (TB1, TB2) pour détecter un niveau d'un paramètre de charge électrique, et
un agencement de commutateur de commande de décharge (131) raccordé entre les bornes de commande de décharge pour commuter, selon le niveau du paramètre de charge électrique, entre la première configuration et la seconde configuration, en mettant en marche ou en arrêtant tous les commutateurs de commande (SW1, SW2) dans l'agencement de commutateur de commande de décharge respectivement,
dans lequel les unités de batterie (111, 112, 113) sont raccordées en parallèle les unes aux autres par le biais des bornes de charge (CP1+, CP1-, CP2+, CP2-, CP3+, CP3-) lorsque les unités de batterie (111, 112, 113) sont chargées, ou sont raccordées en série les unes aux autres par le biais des bornes de décharge (DP1+, DP1-, DP2+, DP2-, DP3+, DP3-) lorsque les unités de batterie (111, 112, 113) sont déchargées,
dans lequel l'unité de commande (130) commande l'agencement de commutateur de commande décharge (131) pour commuter dans la première configuration lorsque le niveau du paramètre de charge électrique est faible,
dans lequel lorsque les bornes de sortie d'un chargeur (200) sont raccordées aux bornes de charge (CP1+, CP1-, CP2+, CP2-, CP3+, CP3-) alors que le chargeur (200) n'est pas raccordé à une alimentation électrique externe, l'unité de commande (130) est configurée pour maintenir les unités de batterie (111, 112, 113) pour être raccordées les unes aux autres en série.

2. Bloc-batteries (100) selon la revendication 1, dans lequel, dans la première configuration, au moins deux bornes de commande de décharge respectives sont interconnectées, et dans la seconde configuration, les bornes de commande de décharge respectives sont déconnectées l'une de l'autre.

3. Bloc-batteries selon la revendication 1 ou 2, dans lequel l'unité de reconnaissance de charge est adaptée à distinguer entre un mode de décharge et un mode de charge, dans lequel les unités de batterie (111, 112, 113) sont raccordées en série lorsque le paramètre de charge électrique indique un mode de décharge du module de batterie (100), et les unités de batterie (111, 112, 113) sont raccordées en parallèle lorsque le paramètre de charge électrique indique un mode de charge du module de batterie (100).

4. Bloc-batteries selon la revendication 3, dans lequel le paramètre de charge électrique est le niveau de tension de charge provenant d'un dispositif de charge (200) raccordé aux bornes de charge (CP1+, CP1-, CP2+, CP2-, CP3+, CP3) du dispositif de gestion de batterie (100) et dans lequel lorsque l'unité de reconnaissance de charge détecte le niveau de tension de charge allant d'élevé à faible ou restant à un premier niveau, l'unité de commande (130) est actionnée pour raccorder les unités de batterie (111, 112, 113) en série, et lorsque l'unité de reconnaissance de charge détecte le niveau de tension de charge allant de faible à élevé ou restant à un second niveau, l'unité de commande (130) est actionnée pour raccorder les unités de batterie (111, 112, 113) en parallèle.

5. Bloc-batteries selon l'une quelconque des revendications 1 à 4, dans lequel au moins deux des bornes de commande de décharge peuvent être raccordées à une charge externe pour décharger le module de batterie.

6. Bloc-batteries selon l'une quelconque des revendications 1 à 5, dans lequel l'agencement de commutateur de commande de décharge (131) comprend un ou plusieurs commutateurs, le ou chaque commutateur étant agencé entre des bornes de commande de décharge respectives.

7. Bloc-batteries selon la revendication 6, dans lequel chaque commutateur est agencé entre des bornes de commande de décharge respectives de polarités opposées.

8. Bloc-batteries selon l'une quelconque des revendications précédentes, dans lequel chaque unité de borne (121d, 122d, 123d) est agencée entre les bornes d'électrode (B1+, B1-, B2+, B2-, B3+, B3) de l'unité de batterie (111, 112, 113) respective et une borne de charge (CP1+, CP1-, CP2+, CP2- CP3+, CP3) respective pouvant être raccordée à un dispositif de charge (200) ou à la borne de commande de décharge respective.

9. Bloc-batteries selon l'une quelconque des revendications précédentes, dans lequel chaque unité de borne (121D, 122d, 123d) comprend :
une borne de charge positive (CP1+, CP2+, CP3+) et une borne de décharge positive (DP1+, DP2+, DP3+) raccordée à la borne de charge positive ; et
une borne de charge négative (CP1-, CP2-, CP3-) et une borne de décharge négative (DP1-, DP2-, DP3-) raccordée à la borne de charge négative.

10. Bloc-batteries selon la revendication 9, dans lequel la borne de charge positive et la borne de décharge positive sont raccordées à une borne d'électrode positive des bornes d'électrode (B1+, B2+, B3+), la borne de charge négative et la borne de décharge négative sont raccordées à une borne d'électrode négative (B1-, B2-, B3-) des bornes d'électrode.

11. Bloc-batteries selon la revendication 9 ou 10, dans lequel la borne de charge positive et la borne de charge négative sont raccordées à l'unité de borne de charge (124).

12. Bloc-batteries selon l'une quelconque des revendications 9 à 11, dans lequel la borne de décharge positive et la borne de décharge négative sont raccordées à la borne de commande de décharge (125) respective.

13. Bloc-batteries selon l'une quelconque des revendications 6 à 12, dans lequel l'agencement de commutateur de commande de décharge comprend en outre une ou plusieurs diodes agencées entre des bornes de commande de décharge respectives.
